Europäisches Patentamt

European Patent Office

Office européen des brevets

(19)

(11) Veröffentlichungsnummer : **0 513 706 B1**

(12) # EUROPÄISCHE PATENTSCHRIFT

(45) Veröffentlichungstag der Patentschrift :
**03.08.94 Patentblatt 94/31**

(51) Int. Cl.$^5$ : **C02F 11/12, F26B 25/00,
B65G 19/14**

(21) Anmeldenummer : **92107875.4**

(22) Anmeldetag : **11.05.92**

(54) **Vorrichtung zum Behandeln von wässrigen pastösen Massen.**

(30) Priorität : **15.05.91 DE 4115804**

(43) Veröffentlichungstag der Anmeldung :
**19.11.92 Patentblatt 92/47**

(45) Bekanntmachung des Hinweises auf die
Patenterteilung :
**03.08.94 Patentblatt 94/31**

(84) Benannte Vertragsstaaten :
**AT CH DE ES FR GB LI NL**

(56) Entgegenhaltungen :
**EP-A- 0 396 852
US-A- 3 421 229**

(73) Patentinhaber : **MASCHINEN- UND
ANLAGENBAU GRIMMA GmbH
Postfach 254/255
D-04662 Grimma (DE)**

(72) Erfinder : **Wiersdorff, Dieter, Dipl.-Ing.
Mühlenweg 11
W-3174 Wedelheine/Meine (DE)**
Erfinder : **Ullner, Klaus, Obering.
Dresdenstrasse 41
W-3300 Braunschweig (DE)**

(74) Vertreter : **Patentanwälte Grünecker,
Kinkeldey, Stockmair & Partner
Maximilianstrasse 58
D-80538 München (DE)**

EP 0 513 706 B1

## Beschreibung

Bei einer hohen Anzahl von chemischen, insbesondere biochemischen, Verfahren fallen als Produkte, jedoch noch öfter als unerwünschte Nebenprodukte, pastöse Massen an, die ein feinteiliges brennbares Material aufweisen. Sollen diese pastösen Massen nicht unmittelbar einer weiteren nasschemischen Reaktion zugeführt werden, sondern gelagert oder oxidativ in ihrem Volumen reduziert werden, so ist eine Trocknung angebracht.

Eine typische derartige pastöse Masse stellt der sogenannte Faulschlamm aus biologischen Abwasserkläranlagen dar. Faulschlamm weist neben den organischen Substanzen auch noch einen relativ hohen Gehalt an Schwermetallen auf, so daß der ursprünglich breit vorgesehene Einsatz von Klärschlamm für Düngezwecke in der Landwirtschaft nicht mehr in der vielfachen Form verwendet wird. Ursache dafür ist nicht die absolut gesehene Konzentration der Schwermetalle, sondern der Umstand, daß die Schwermetalle aus dem Zyklus Mensch/Tier/Düngemittel, biologischer Abwasseranlage und Pflanze nicht vollständig ausgeschieden werden, sondern daß eine stetige Anreicherung der Schwermetalle stattfindet. Aus diesem Grund ist es empfehlenswert, zumindest einen Teil der Klärschlämme aus dem Kreislauf herauszuziehen und einer anderen Verwertung zuzuführen.

Diese Verwertung kann auf verschiedene Weise erfolgen, doch ist, zur Erleichterung von Lagerhaltung und/oder Transport, meist dazu eine vorgängige Trocknung nötig. Beispielsweise kann die Verwertung auf oxidativem Wege durchgeführt werden, da die Trockensubstanz des Klärschlammes einen Heizwert aufweist, welcher in etwa jenem einer Braunkohle entspricht. Die bei der Verbrennung anfallende Wärme kann entweder für den Trocknungsprozeß des Klärschlammes oder auch zur weiteren Engerieverwertung, z. B. Fernwärme, elektrische Energieumwandlung oder dgl., eingesetzt werden.

Bei der Trocknung von Klärschlämmen, aber auch anderer wässriger pastöser Massen, kommt es fast unvermeidlich zur Staubbitdung. Gerade dann, wenn es sich um Materiatien handelt, die einer Oxydierung zugänglich sind, wie Klärschlamm, ist dann stets die Gefahr von Staubexplosionen gegeben, und zwar je mehr die Trocknung vorwärtsschreitet.

Es wurden bereits verschiedene Vorschläge gemacht, um diesen Problemen zu begegnen. Einerseits wurden die dafür eingesetzten Antagen vielfach mit Explosionsschutzklappen ausgerüstet, andererseits wurde bereits der Versuch unternommen, die Trocknung unter solchen Bedingungen zu betreiben, daß eine höhere Korngröße erreicht wird, wodurch die Explosionsgefahr vermindert werden kann. Allerdings ist dies nur in manchen Fällen durchführbar, wenn die dazu nötigen Randbedingungen hinsichtlich der Wahl des Ausgangsmaterials und allfälliger Zutaten genau eingehatten werden können. Klärschlamm ist aber eine Substanz, deren Konsistenz sich von Ort zu Ort, aber auch mit der Jahreszeit und mit dem Wechsel von Gepflogenheiten verändert, so daß das Erreichen höherer Korngrößen nicht immer gewährleistet ist.

Zur Vermeidung der Brand- und Explosionsgefahr ist es ebenfalls bereits bekannt, derartige Trocknerantagen unter Inertgas zu betreiben. Die Betriebskosten derartiger Anlagen sind jedoch so hoch, daß ein breiter Einsatz kaum gewährleistet ist. Weiterhin besteht die Gefahr, daß die getrockneten partikulierten und teilweise staubförmigen Massen unmittelbar nach Vertassen der Antage unerwünschte Glimmbrände und gefährliche Staubexplosionen verursachen. Allerdings ist damit eine gasdichte Führung der, nicht immer billigen, Inertgase verbunden, was die Kosten einer entsprechenden Antage erhöht.

Der Erfindung liegt die Aufgabe zugrunde, eine Vorrichtung zur Behandlung von wässrigen pastösen Massen, insbesondere brennbarer feinteiliger Materiatien, zu schaffen, die besonders störungsfrei arbeitet und mit der eine kontinuierliche Arbeitsweise kostengünstig gewährleistet ist. Da, wie bereits ausgeführt, während des Trocknungsprozesses der pastösen Masse brennbare Substanzen entstehen, muß dafür Sorge getragen werden, daß neben Glimmbränden auch die überaus gefürchteten Staubexplosionen vermieden werden können. Erfindungsgemäß ist diese Aufgabe durch eine Vorrichtung mit den Merkmalen des Anspruches 1 gelöst.

Durch die Erfindung werden mehrere Vorteile erreicht. Die Anlage gestattet eine kontinuierliche Arbeitsweise, wobei die Entwässerung des Schlammes mit einem retativ geringen Energieaufwand erreicht wird und die Betriebskosten der Anlage für einen sicheren Betrieb gering gehatten werden. Der Grund hierfür liegt darin, daß durch den dichten Anschluß an den Trockner bereits dessen Brüden, d. h. die im Trockner entstehenden Gase und Dämpfe, eine Inertgasatmosphäre schaffen, die - ohne weitere Kosten - einen mindestens teilweisen Schutz gegen unerwünschte Oxydation, d. h. vor allem gegen Staubexplosionen, bewirken.

Ferner hat sich die Verwendung eines Rohrkettenförderers aus mehreren Gründen als guter Explosionsschutz herausgestellt, was - angesichts der Bekanntheit solcher Förderer - eigentlich überraschen muß. Zum einen besitzt ein Rohrkettenförderer ein geschlossenes Rohr, in dem sich die Förderkette bewegt. Dadurch wird bereits der Zutritt von Sauerstoff zurückgehalten. Dazu kommt, daß eine solche Förderkette den Raum des Förderrohres durch ihre Mitnehmer-Förderkette in einzelne, retativ kleine Kammern unterteilen kann, wie dies im Anspruch 5 zum Ausdruck gebracht ist, wobei diese Unterteilungen bewirken, daß sich eine eventuelle Druckvergrößerung nicht ungehemmt auswirken kann, wenn es überhaupt zu einer solchen kommen sollte.

Auch die Ausgestaltung nach Anspruch 2 ist an sich überraschend, denn es erscheint auf den ersten Blick nicht sinnvoll, die eben erst getrocknete Masse im Anschluß daran wieder zu befeuchten. Dies hat aber im Rahmen der Erfindung den besonderen Zweck, die durch die Trocknung geschaffenen Feinteile durch Zugabe von Feuchtigkeit, und gegebenenfalls von Bindemittel in geringen Mengen, zu granulieren und damit die durchschnittliche Korngröße heraufzusetzen, z. B. auf 0,4 mm, so daß eine weitere Maßnahme in Richtung auf einen erhöhten Explosionsschutz getroffen ist.

Zur Erhöhung der Betriebssicherheit, aber auch zur Kostenreduktion, dienen die Maßnahmen nach Anspruch 4, durch die der Rohrkettenförderer mehrere Funktionen ausüben kann.

Die Vorrichtung nach der Erfindung kann in unterschiedlichsten Arten realisiert werden. So wird durch die Vorschaltung eines Vorlagebehälters für die kontinuierlich arbeitende Entwässerungseinrichtung dem diskontinuierlichen Anfall der wässrigen pastösen Massen Rechnung getragen, wobei durch die mechanische Entwässerungseinrichtung, wie sie beispielsweise durch eine Zentrifuge gegeben ist, ein besonders geringer energetischer Aufwand erforderlich ist, da keine Verdampfung eines flüssigen Dispersionsmittels notwendig ist. Durch die Verbindung der Ausgangsöffnung der mechanischen Entwässerungseinrichtung mit einem Zwischenbehälter wird wieder der Möglichkeit von unterschiedlichen Durchsatzmengen Rechnung getragen, so daß auch bei geringerer Leistung der mechanischen Entwässerungseinrichtung ein kontinuierlicher Betrieb des Förderers und damit des Trockners gewährleistet ist. Durch den Befeuchter wird erreicht, daß die staubförmigen Partikelchen aus ihrer in der gasförmigen Phase befindlichen Position auf der festen Phase abgeschieden werden, so daß die Teilchengröße, welche für eine Staubexplosion maßgeblich ist, über die Explosionsgrenzen angehoben wird. Mit der an den Befeuchter sich anschließenden Kühlstrecke wird auch verhindert, daß in einem anschließenden Vorratsbehälter, Transportbehälter oder Behandlungsbehälter Glimmnester aufgrund der erhöhten Temperatur nach dem Trockner entstehen können. Bei Ausbildung des Befeuchters als Förderorgan, insbesondere Kettenförderer, in welchen ein bindemittelhaltiges Wasser eingesprüht wird, wird auch im Befeuchter, insbesondere beim Eingang, eine Verhinderung von Glimmnestern und Staubexplosionen, die sich ausbreiten, erreicht, wobei durch das bindemittelhaltige Wasser ein besonders vorteilhafter Niederschlag der Staubelemente auf die bereits fest vorliegenden Trockensubstanzen gewährleistet ist.

Durch eine druckfeste Bauweise, insbesondere mit -wegen der größeren Festigkeit - runden Querschnitten bei dem Trockner und/oder Rohrkettenförderer und/oder Befeuchter, ist sichergestellt, daß bei Verpuffung und Explosionen auch nicht die geringfügigste Zerstörung der einzelnen Vorrichtungsteile erfolgt, so daß auch bei unerwünschten Betriebsstörungen der einwandfreie Betrieb gewährleistet ist.

Weisen der Trockner und/oder der Rohrkettenförderer und/oder der Befeuchter Berstscheiben, Explosionsklappen oder dgl. auf, so ist ein Zerstörungsschutz der Komponenten der Anlage auch für unübliche und unvorhergesehene Störfälle vorgesehen.

Sind der Trockner und/oder Rohrkettenförderer und/oder Befeuchter elektrisch geerdet, so ist eine zusätzliche Sicherheit gegen elektrisch bedingte Glimmnester oder auch Staubexplosionen gegeben.

Mit einer gasdichten Ausbildung der einzelnen Komponenten, insbesondere des Trockners und/oder des Kettenförderers, die gegebenenfalls eine gasdichte Absaugleitung aufweisen, wird in den Komponenten die Brandgefahr herabgesetzt, wobei gleichzeitig eine Geruchsbelästigung durch austretende Gase aus den Komponenten sicher verhindert werden kann, da in denselben ein geringfügiger Unterdruck gegenüber der Atmosphäre aufbaubar ist.

Weisen der Trockner und gegebenenfalls der anschließende Kettenförderer eine Gasabsaugleitung auf, die über ein Biofilter austrägt, so ist eine besonders geruchsarme Behandlungsvorrichtung gegeben.

Weist der Kettenförderer und/oder der Befeuchter und/oder die Kühlstrecke eine indirekte Kühlung, insbesondere Gegenstromkühlung, für das Trockengut auf, so kann dasselbe bereits unter einem vorgegebenen gasförmigen Medium abgekühlt werden, so daß die Brand-und Explosionsgefahr weiter reduzierbar ist.

Mündet die, insbesondere thermisch isolierte, Gasabsaugleitung aus dem Trockner in einen Kondensator zur Kondensation der Wasserdämpfe, so kann einerseits die Kondensationswärme gewonnen und beispielsweise in den Prozeß rückgeführt werden und andererseits wird ein zusätzlicher Unterdruck durch einfache Mittel im Trockner erreicht.

Im folgenden wird die Erfindung anhand der Figuren beispielhaft näher erläutert. Es zeigen:

Fig. 1    die erfindungsgemäße Vorrichtung in einem Blockschema und

Fig. 2    einen Längsschnitt durch eine Ausführungsform eines erfindungsgemäß verwendeten Rohrförderers.

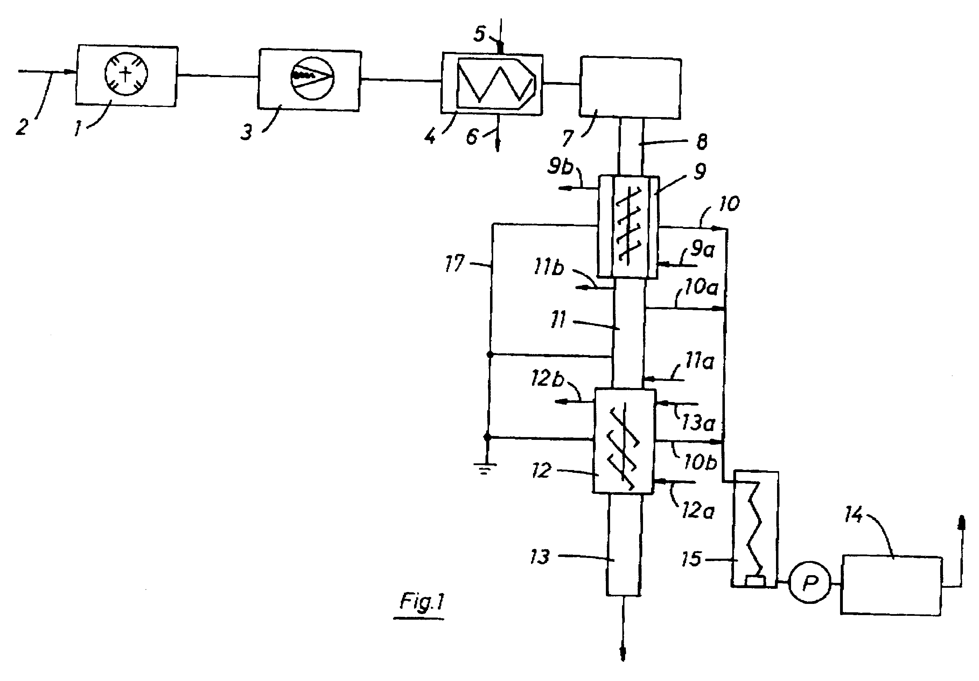

Aus einem nicht dargestellten Vortagebehälter wird gemäß Fig. 1 der wässrige Faulschlamm über die Zuleitung 2 einem Dünnschlammzerkleinerer 1 zugeführt, wonach der Schlamm über einen Förderer, und zwar über eine Exzenterschneckenpumpe 3, zur Zentrifuge 4 gelangt. In der Zentrifuge 4 wird ferner über eine Leitung 5 ein Flockungsmittel zugeführt. Über eine Leitung 6 wird das abgeschiedene Wasser abgezogen. Der entwässerte Dickschlamm fällt in einen Zwischenbehälter 7, aus welchem der Dickschlamm über nicht dargestellte Einzugsschnecken einem weiteren Förderer 8, und zwar einer Exzenterschneckenpumpe, zugeführt wird. Durch die exzentrische Laufweise der Einzugsschnecke und einer darüber angeordneten Rückführschnecke ist eine Brückenbildung des Dickschlammes ausgeschlossen und ein hoher Füllungsgrad der Exzenterschneckenpumpe 8 gewährleistet. In diesem Bereich kann der Wassergehalt des Dickschlammes kontinuierlich oder auch diskontinuierlich bestimmt werden, wobei dann über diese Kenngröße die Trockenleistung des anschließenden Trockners 9 gesteuert werden kann.

Der Trockner 9 weist einen druckfesten inneren Zylinder auf und ist als Doppelmantel ausgebildet, der als Gegenstromwärmeaustauscher mit Zu- und Ableitungen 9a, 9b beispielsweise mit Heißdampf beaufschlagt wird. Im Inneren des in etwa zylinderförmigen Raumes sind ebenfalls beheizbare Knetarme als bewegliche Heizflächen auf einer Welle befestigt. Die Zufuhr und Abfuhr des Heizmediums zu den einzelnen Knetarmen erfolgt über diese Welle, die als Hohlwelle ausgebildet ist. Durch den intensiven Knetvorgang ist eine Ablagerung des Schlammes in Form den Wärmeübergang behindernder Krusten vermieden. Der Schlamm verläßt den Trockner mit einem Gehalt von etwa 90 Gew.% Trockensubstanz, allenfalls auch darunter. über eine thermisch isolierte Brüdenleitung 10 wird der Wasserdampf durch die Pumpe P abgesaugt, wobei vor der Pumpe ein Kondensator 15 angeordnet sein kann.

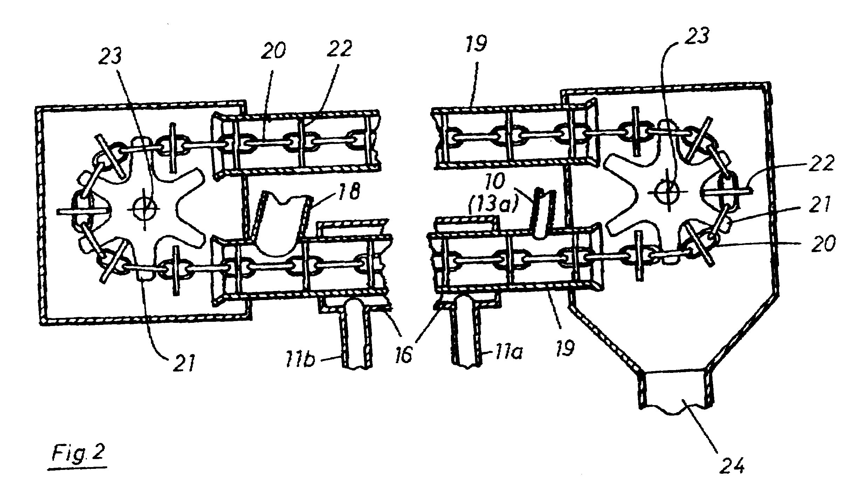

An den Trockner 9 ist über ein Rohr 18 ein Rohrkettenförderer 11 gemäß Fig. 2 angeschlossen, welcher genauso wie der Trockner 9 in druckfester Weise ausgebildet ist. Der Rohrkettenförderer 11 weist zylinderförmige Rohre 19 auf, welche in nicht dargestellter, an sich bekannter Weise lediglich zur größeren Sicherheit mit Berstscheiben versehen sind. Die Wandstärken sind so ausgebildet, daß eine Zerstörung des Rohrkettenförderers 11 selbst durch Staubexplosionen sicher verhindert ist. Die Rohre 19 weisen vorzugsweise zur Erhöhung ihrer Festigkeit einen kreisförmigen Querschnitt auf, wobei eine Kette 20 an den beiden jeweiligen Enden des Rohrkettenförderers 11 über Kettenräder 21, die auf Achsen 23 sitzen, umgelenkt wird. Die Kettenglieder selbst weisen eine wesentlich geringere Quererstreckung als der Durchmesser der Rohre 19 auf, weshalb, um die erwünschten Förderleistungen zu erreichen, Querelemente als Förderelemente 22 an der Kette 20 befestigt sind. Diese Förderelemente 22 bilden einzelne räumlich voneinander getrennte Förderabteile, so daß ein übertreten, beispielsweise eines Brandes, von einem Abteil zum anderen Abteil wirkungsvoll verhindert werden kann. Die Förderkette 20 wird über mindestens eine der beiden Kettenrad-Achsen 23 angetrieben. Das geförderte Gut wird über eine öffnung 24 ausgetragen.

Um das aggressive Verhalten des Schlammes gegenüber dem Kettenförderer 11 besonders gering zu halten und um gleichzeitig Ablagerungen auf den Förderelementen 20, 22 zu vermeiden, können diese beispielsweise aus Polypropylen, Polyäthylen oder dgl. bestehen. Auch eine Beschichtung der Kettenglieder mit derartigen Materiatien kann vorteilhaft sein.

Der Kettenförderer 11 kann über eine Brüdenleitung 10a ebenfalls mit der Pumpe P verbunden sein, falls dies erforderlich ist. Der Kettenförderer 11 dient gleichzeitig als Kühler für den getrockneten Dickschlamm, und sein förderndes Rohr 19 weist als Kühlmantel 16 einen Doppelmantel auf, der Zu- und Ableitungen 11a und 11b besitzt, über welche Kühlwasser im Gegenstrom zu- und abgeführt wird. Der Rohrkettenförderer 11 fördert in den Befeuchter 12, welcher als Klumpierer kontinuierlich arbeitet und ebenfalls druckfest und gegebenenfalls mit Explosionsklappen oder Berstscheiben ausgebildet ist. Auch der Befeuchter 12 kann eine Brüdenleitung 10b aufweisen, die mit der Pumpe P verbunden ist, doch sind die Leitungen 10a, 10b im allgemeinen nicht erforderlich. Der Befeuchter 12 ist mit einer Gegenstrom-Kühlstrecke versehen, an die die Zuleitung 12a und Ableitung 12b angeschlossen sind. Im Klumpierer wird über eine Leitung 13a ein Wassernebel, gege-nenfalls mit einem Bindemittel, oder auch nur das letztere alleine, eingebracht. Im Anschluß an den Befeuchter 12 ist ein weiterer Kettenförderer 13 als Kühlstrecke vorgesehen, der seinerseits wieder druckfest ausgebildet sein kann und, falls erforderlich, über eine Gegenstromkühlung verfügt. Dieser Kettenförderer 13 kann beispielsweise in einen Zwischen-Lagerbehälter, aber auch in einen Transportbehälter, z. B. Container, fördern. Wenn die Trockenvorrichtung für die pastösen Massen bei einem Fernheizwerk angeordnet wird, kann der Kettenförderer 13 auch direkt auf ein Förderband liefern, so daß der getrocknete Schlamm entweder direkt zur Verbrennung oder zu einem Silo gefördert wird. Der am Austragsende angeordnete Kettenförderer 13 kann analog wie der Rohrkettenförderer 11 ausgebildet sein.

Die Explosionsgefahr ist am Ausgang des Trockners 9 und im anschließenden Kettenförderer 11 am größten, da dort einerseits der Trockengehalt bereits sehr groß ist und andererseits staubförmige Partikelchen, beispielsweise mit einer Korngröße von unter 0,4 mm, auftreten. Im anschließenden Befeuchter 12 werden die staubigen Anteile auf dem Granulatanteil gebunden, so daß die Feinstaubmenge wesentlich reduziert werden kann. Um eine nachträgliche Erwärmung zu verhindern, sind solche Arbeitstemperaturen im Trockner 9 erwünscht, welche eine Abtötung der Mikroorganismen sicherstellen. Die den Trockner 9 noch vital verlassenden Mikroorganismen können erst ab einem gewissen Wassergehalt in der Trockensubstanz aktiv werden, so daß eine bestimmte Mindesttrocknung eine wesentliche Voraussetzung der sicheren Lagerung ist.

Um die Geruchsbelästigung gering zu halten, getangen die über die Brüdenleitungen 10 und ggf. 10a und 10b abgesaugten Gase vorerst über den Kondensator 15, in welchem das Wasser abgeschieden wird und über einen Biofilter 14 ins Freie. Dieser Biofilter 14 besteht beispielsweise aus Humus oder dgl., in welchem die besonders geruchsbelästigenden Substanzen mikrobiologisch abgebaut werden.

Zur Vermeidung elektrostatischer Aufladungen ist die gesamte Anlage mit einer elektrischen Erdung 17 versehen, so daß auch diese Gefahrenquelle ausgeschaltet ist.

| | | | |
|---|---|---|---|
| 1 | Dünnschlammzerkleinerer | 21 | Kettenrad |
| 2 | Zuleitung | 22 | Förderelement |
| 3 | Exzenterschneckenpumpe | 23 | Achse |
| 4 | Zentrifuge | 24 | Öffnung |
| 5 | Leitung | | |
| 6 | Leitung | P | Pumpe |
| 7 | Zwischenbehälter | | |
| 8 | Exzenterschneckenpumpe | | |
| 9 | Trockner | | |
| 9a | Zuleitung | | |
| 9b | Ableitung | | |
| 10 | Brüdenleitung | | |
| 10a | Brüdenleitung | | |
| 10b | Brüdenleitung | | |
| 11 | Rohrkettenförderer | | |
| 11a | Zuleitung | | |
| 11b | Ableitung | | |
| 12 | Befeuchter | | |
| 12a | Zuleitung | | |
| 12b | Ableitung | | |
| 13 | Kettenförderer | | |
| 13a | Leitung | | |
| 14 | Biofilter | | |
| 15 | Kondensator | | |
| 16 | Kühlmantel | | |
| 17 | Erdung | | |
| 18 | Rohr | | |
| 19 | zylinderförmiges Rohr | | |
| 20 | Kette | | |

## Patentansprüche

1. Vorrichtung zum Behandeln von wässrigen pastösen Massen, die brennbare feinteilige Materialien enthalten, insbesondere von Schlämmen wie Klärschlämmen, mit einem Trockner (9) mit bewegbaren Heizflächen zum Trocknen der Masse auf eine vorbestimmte Restfeuchtigkeit, dadurch gekennzeichnet, daß an den Trockner (9) ausgangsseitig mindestens ein Rohrkettenförderer (11) dicht angeschlossen ist, von dem die getrocknete Masse abgeführt wird.

2. Vorrichtung nach Anspruch 1, dadurch gekennzeichnet, daß der Rohrkettenförderer (11) mit einem Befeuchter (12) verbunden ist.

3. Vorrichtung nach Anspruch 2, dadurch gekennzeichnet, daß der Befeuchter (12) als Förderorgan, insbesondere Rohrkettenförderer, ausgebildet ist, in welchem bindemittelhaltiges Wasser durch eine Leitung (13a) aussprühbar ist.

4. Vorrichtung nach einem der vorhergehenden Ansprüche, dadurch gekennzeichnet, daß eine Kühlstrecke vorgesehen ist, die insbesondere als Rohrkettenförderer (13) mit Kühlmantel (16), gegebenenfalls mit Gegenstromkühlung, ausgebildet ist.

5. Vorrichtung nach einem der vorhergehenden Ansprüche, dadurch gekennzeichnet, daß die Kette (20) des Rohrkettenförderers (11, 13) Förderelemente (22) trägt, durch die jeweils einzelne, räumlich voneinander abgetrennte, Abteile im Rohr (19) des Rohrkettenförderers (11, 13) gebildet sind.

6. Vorrichtung nach einem der vorhergehenden Ansprüche, dadurch gekennzeichnet, daß der Trockner (9) und/oder der Rohrkettenförderer (11) und/oder der Befeuchter (12) in druckfester Bauweise, insbesondere mit einer druckfesten Wandstärke, aufgebaut sind.

7. Vorrichtung nach Anspruch 6, dadurch gekennzeichnet, daß wenigstens das fördernde Rohr (19) des Rohrkettenförderers (11, 13) Kreisquerschnitt besitzt.

8. Vorrichtung nach einem der Ansprüche 1 bis 7, dadurch gekennzeichnet, daß der Trockner (9) und/oder der Rohrkettenförderer (11) und/oder der Befeuchter (12) Berstscheiben, Explosionsklappen oder dgl. aufweist bzw. aufweisen.

9. Vorrichtung nach einem der Ansprüche 1 bis 8, dadurch gekennzeichnet, daß der Trockner (9) und/oder der Rohrkettenförderer (11) und/oder der Befeuchter (12) mit einer elektrischen Erdung (17) versehen sind.

10. Vorrichtung nach einem der Ansprüche 1 bis 9, dadurch gekennzeichnet, daß die einzelnen Komponenten, insbesondere der Trockner (9) und/oder der Rohrkettenförderer (11), der Vorrichtung gasdicht ausgebildet sind und gegebenenfalls eine Brüdenleitung (10, 10a) als Gasabsaugleitung aufweisen.

11. Vorrichtung nach einem der Ansprüche 1 bis 10, dadurch gekennzeichnet, daß der Trockner (9) und gegebenenfalls der anschließende Rohrkettenförderer (11) Brüdenleitungen (10, 10a) aufweisen, die über ein Biofilter (14) austragen.

12. Vorrichtung nach einem der Ansprüche 1 bis 11, dadurch gekennzeichnet, daß der Rohrkettenförderer (11) und/oder Befeuchter (12) und/oder die Kühlstrecke eine indirekte Kühlung, insbesondere in Form eines Gegenstromkühlmantels (16), für das Trockengut aufweist bzw. aufweisen.

13. Vorrichtung nach einem der Ansprüche 1 bis 12, dadurch gekennzeichnet, daß die, insbesondere thermisch isolierte, Brüdenleitung (10, 10a, 10b) aus dem Trockner (9) und/oder dem Rohrkettenförderer (11) und/oder dem Befeuchter (12) und/oder der Kühlstrecke in einen Kondensator (15) zur Kondensation der Wasserdämpfe mündet.

14. Vorrichtung nach einem der vorhergehenden Ansprüche, dadurch gekennzeichnet, daß dem mit dem Rohrkettenförderer (11 bzw. 13) verbundenen Trockner (9) eine kontinuierliche mechanische Entwässerungseinrichtung, insbesondere eine Zentrifuge (4), vorgeschaltet ist.

15. Vorrichtung nach Anspruch 14, dadurch gekennzeichnet, daß die Austragsöffnung für die höherviskose Masse, insbesondere Dickschlamm, der mechanischen Entwässerungseinrichtung (Zentrifuge 4) mit einem Zwischenbehälter (7) verbunden ist, welcher bevorzugt seinerseits über einen Förderer (8) und gegebenenfalls einer Rohrleitung mit dem Trockner (9) verbunden ist.

## Claims

1. Apparatus for the treatment of aqueous pasty materials containing combustible fine-particle materials, more particularly sludges such as clarified sludges, comprising a dryer (9) with movable heating surfaces for drying the material to a predetermined residual moisture, characterised in that at least one tubular chain conveyor (11) is hermetically connected to the outlet side of the dryer (9) and discharges the dried material.

2. Apparatus according to claim 1, characterised in that the tubular chain conveyor (11) is connected to a humidifier (12).

3. Apparatus according to claim 2, characterised in that the humidifier (12) is constructed as a conveyor means, more particularly a tubular chain conveyor, in which binder-containing water can be sprayed out through a pipe (13a).

4. Apparatus according to any one of the preceding claims, characterised in that a cooling zone is provided, which is constructed more particularly as a tubular chain conveyor (13) having a cooling jacket (16), with counter-current cooling if required.

5. Apparatus according to any one of the preceding claims, characterised in that the chain (20) of the tubular chain conveyor (11, 13) carries conveyor elements (22) which form discrete physically separated compartments in the tube (19) of the tubular chain conveyor (11, 13).

6. Apparatus according to any one of the preceding claims, characterised in that the dryer (9) and/or the tubular chain conveyor (11) and/or the humidifier (12) are of pressure-resistant construction, more particularly with a pressure-resistant wall thickness.

7. Apparatus according to claim 6, characterised in that at least the conveying tube (19) of the tubular chain conveyor (11, 13) has a circular cross-section.

8. Apparatus according to any one of claims 1 to 7, characterised in that the dryer (9) and/or the tubular chain conveyor (11) and/or the humidifier (12) have rupture discs, explosion flaps or the like.

9. Apparatus according to any one of claims 1 to 8, characterised in that the dryer (9) and/or the tubular chain conveyor (11) and/or the humidifier (12) are provided with an electrical earth (17).

10. Apparatus according to any one of claims 1 to 9, characterised in that the individual components, more particularly the dryer (9) and/or the tubular chain conveyor (11), of the apparatus are of gas-tight construction and, if required, have a vapour line (10, 10a) as a gas extraction line.

11. Apparatus according to any one of claims 1 to 10, characterised in that the dryer (9) and if required the connected tubular chain conveyor (11) have vapour lines (10, 10a) which discharge via a biofilter (14).

12. Apparatus according to any one of claims 1 to 11, characterised in that the tubular chain conveyor (11) and/or humidier (12) and/or the cooling zone have indirect cooling, more particularly in the form of a counter-current cooling jacket (16), for the material for drying.

13. Apparatus according to any one of claims 1 to 12, characterised in that the vapour line (10, 10a, 10b), which is more particularly thermally insulated, leads from the dryer (9) and/or the tubular chain conveyor (11) and/or the humidifier (12) and/or the colling zone into a condenser (15) for condensing the water vapours.

14. Apparatus according to any one of the preceding claims, characterised in that the dryer (9) connected to the tubular chain conveyor (11; 13) is preceded by a continuous mechanical dewatering device, more particularly a centrifuge (4).

15. Apparatus according to claim 14, characterised in that the discharge aperture for the higher-viscosity material, more particularly thick sludge, of the mechanical dewatering means (centrifuge 4) is connected to an intermediate tank (7) which preferably is in turn connected to the dryer (9) via a conveyor (8) and if required a pipeline.

## Revendications

1. Appareil pour le traitement de masses aqueuses pâteuses, qui contiennent des matériaux combustibles finement divisés, en particulier de boues comme des boues claires, comportant un séchoir (9) avec des surfaces chauffantes mobiles pour sécher la masse pour l'amener à une humidité résiduelle prédéterminée, appareil caractérisé par le fait qu'au séchoir (9), côté sortie, est raccordé de façon étanche au mons un transporteur à chaîne tubulaire (11) par lequel la masse séchée est évacuée.

2. Appareil selon la revendication 1, caractérisé par le fait que le transporteur à chaîne tubulaire (11) est relié à un humidificateur (12).

3. Appareil selon la revendication 2, caractérisé par le fait que l'humidificateur est conçu sous forme d'organe transporteur, en particulier de transporteur à chaîne tubulaire dans lequel de l'eau contenant un liant peut être pulvérisée par une conduite (13a).

4. Appareil selon l'une des revendications précédentes, caractérisé par le fait qu'est prévue une longueur de refroidissement qui est conçue en particulier sous forme de transporteur à chaîne tubulaire (13) avec l'enveloppe de refroidissement (16), éventuellement avec refroidissement à contre-courant.

5. Appareil selon l'une des revendications précédentes, caractérisé par le fait que la chaîne (20) du transporteur à chaîne tubulaire (11, 13) porte des éléments de transport (22) grâce à chacun desquels se forment, dans le tube (19) du transporteur à chaîne tubulaire (11, 13), différents compartiments spatialement séparés les uns des autres.

6. Appareil selon l'une des revendications précédentes, caractérisé par le fait que le séchoir (9) et/ou le transporteur à chaîne tubulaire (11) et/ou l'humidificateur (12) sont construits en mode résistant à la pression, en particulier avec une épaisseur de paroi résistant à la pression.

7. Appareil selon la revendication 6, caractérisé par le fait qu'au moins le tube transporteur (19) du transporteur à qu'au moins le tube transporteur (19) du transporteur à chaîne tubulaire (11, 13) présente une section circulaire.

8. Appareil selon l'une des revendications 1 à 7, caractérisé par le fait que le séchoir (9) et/ou le transporteur à chaîne tubulaire (11) et/ou l'humidificateur (12) présente ou présentent des plaques de rupture, des volets anti-explosion ou analogues.

9. Appareil selon l'une des revendications 1 à 8, caractérisé par le fait que le séchoir (9) et/ou le transporteur à chaîne tubulaire (11) et/ou l'humidificateur (12) sont équipés d'une mise à la terre électrique (17).

10. Appareil selon l'une des revendications 1 à 9, caractérisé par le fait que les différents composants de l'appareil, en particulier le séchoir (9) et/ou le transporteur à chaîne tubulaire (11), sont conçus étanches au gaz et présentent éventuellement une conduite des gaz d'échappement (10, 10a) sous forme de conduite d'aspiration des gaz.

11. Appareil selon l'une des revendications 1 à 10, caractérisé par le fait que le séchoir (9) et éventuellement le transporteur à chaîne tubulaire (11) qui vient à la suite présentent des conduites (10, 10a) d'aspiration des gaz qui évacuent par l'intermédiaire d'un biofiltre (14).

12. Appareil selon l'une des revendications 1 à 11, caractérisé par le fait que le transporteur à chaîne tubulaire (11) et/ou l'humidificateur (11) et/ou la longueur de refroidissement présente ou présentent un refroidissement indirect, en particulier sous forme d'une enveloppe de refroidissement à contre-courant (16) pour le produit séché.

13. Appareil selon l'une des revendications 1 à 12, caractérisé par le fait que la conduite (10, 10a, 10b) des gaz d'échappement, en particulier thermiquement isolée débouche du séchoir (9) et/ou du transporteur à chaîne tubulaire (11) et/ou de l'humidificateur (12) et/ou de la longueur de refroidissement, dans un condenseur (15) pour la condensation des vapeurs d'eau.

14. Appareil selon l'une des revendications précédentes, caractérisé par le fait qu'en amont du séchoir (9) relié au transporteur à chaîne tubulaire (11 ou 13) est disposé un dispositif de déshydration mécanique continue, en particulier une centrifugeuse (4).

15. Appareil selon la revendication 14, caractérisé par le fait que l'ouverture d'évacuation de la masse très visqueuse, en particulier des boues épaissies, hors du dispositif de déshydration mécanique (centrifugeuse 4) est reliée à un réservoir de stockage intermédiaire (7) qui de préférence, de son côté, est relié au séchoir (9) par l'intermédiaire d'un transporteur (8) et éventuellement une conduite tubulaire.

Fig.1

EP 0 513 706 B1

Fig. 2

EP 0 513 706 B1